# EUROPEAN PATENT APPLICATION

(11) **EP 4 640 955 A1**
(43) Date of publication of application: **29.10.2025**
(21) Application number: 23918604.2
(22) Date of filing: 15.12.2023
(51) Int. Cl.: E02F 3/43

(54) **WHEEL LOADER**

(30) Priority: 27.01.2023 JP 2023010917
(71) Applicant: Hitachi Construction Machinery Co., Ltd., Tokyo 110-0015 (JP)
(72) Inventor: TSUTSUMI, Yoshiaki, Tsuchiura-shi, Ibaraki 300-0013 (JP); KOTAKA, Toshio, Tsuchiura-shi, Ibaraki 300-0013 (JP); TANAKA, Tetsuji, Tsuchiura-shi, Ibaraki 300-0013 (JP)
(74) Representative: Manitz Finsterwald Patent- und Rechtsanwaltspartnerschaft mbB
(86) International application number: PCT/JP2023/045044
(87) International publication number: WO 2024/157649

(57) **Abstract**

A wheel loader capable of suppressing the execution of autonomous excavation which is not intended by an operator is provided. In a wheel loader 1 capable of carrying out bucket detent control for holding a bucket 23 in a posture in which a bottom surface of the bucket 23 is parallel to a ground surface that a vehicle body is touching and autonomous excavation control for autonomously excavating a working target object, a controller 5, 5A is configured to execute processing relating to the bucket detent control, and, in a case where a lift arm force F is more than a predetermined working device load Fth, determine that the excavation of the working target object will start and execute processing relating to the autonomous excavation control.

## Description

### TECHNICAL FIELD

The present invention relates to a wheel loader with an autonomous excavation control system.

### BACKGROUND ART

In recent years, for the purpose of reducing the operation burden on an operator and improving work efficiency, a technique of autonomous excavation for carrying out excavation by controlling the operations of a working device using a controller has appeared. In this autonomous excavation, typically, the controller determines the start of excavation based on the decrease in the vehicle speed, increase in the bottom pressure of the lift arm cylinder, change in the posture of the working device, and the like, and instead of an operator manipulating the operation device, the controller controls a lift operation of the lift arm and a tilt operation (also referred to as a raising operation or a cloud operation) of the bucket.

For example, in the autonomous excavation for the wheel loader disclosed in Patent Literature 1, for determining start of excavation, a bottom plate portion of the bucket is provided with an inclined portion which inclines upward toward the back side of the bucket, so as to allow the bottom pressure of the lift arm cylinder during excavation to easily increase, and a threshold value higher than that in the case of using a typical bucket in which an inclined portion is not provided in the bottom plate portion is set.

### CITATION LIST

### PATENT LITERATURE

Patent Literature 1: JP-B-6242919

### SUMMARY OF INVENTION

### TECHNICAL PROBLEM

However, in the wheel loader according to Patent Literature 1 which provides the inclined portion in the bottom plate portion to cause the bottom pressure of the lift arm cylinder to easily increase, the bottom pressure of the lift arm cylinder easily increases not only in the start of excavation work but also in the start of leveling work for making the road surface flat using the bucket. In this structure, as long as the controller determines the start of excavation based only on the bottom pressure of the lift arm cylinder, erroneous determination in which the start of excavation is determined although leveling is being performed cannot be avoided. Furthermore, in the wheel loader according to Patent Literature 1, a dedicated bucket provided with an inclined portion in a bottom plate portion has to be prepared, and thus a typical bucket, in other words, a generally used bucket cannot be used.

Therefore, the object of the present invention is to provide a wheel loader capable of suppressing the execution of autonomous excavation which is not intended by an operator.

### SOLUTION TO PROBLEM

In order to achieve the object described above, the present invention provides a wheel loader comprising: a lift arm rotatably mounted to a vehicle body; a bucket rotatably mounted to a distal end portion of the lift arm; lift arm cylinders for driving the lift arm; a bucket cylinder for driving the bucket; a hydraulic pump for supplying hydraulic oil to the lift arm cylinders and the bucket cylinder, respectively; a lift arm directional control valve for controlling a flow of the hydraulic oil supplied from the hydraulic pump to the lift arm cylinders; a bucket directional control valve for controlling a flow of the hydraulic oil supplied from the hydraulic pump to the bucket cylinder; and a controller configured to the lift arm directional control valve and the bucket directional control valve, respectively, so as to carry out bucket detent control for holding the bucket in a posture in which a bottom surface of the bucket is parallel to a ground surface that the vehicle body is touching, and autonomous excavation control for autonomously excavating a working target object, wherein the wheel loader includes a first load detection device for detecting a load applied to the lift arm, and the controller is configured to execute processing relating to the bucket detent control, and, in a case where the load applied to the lift arm detected by the first load detection device is more than a predetermined working device load, execute processing relating to the autonomous excavation control.

### ADVANTAGEOUS EFFECTS OF INVENTION

According to the present invention, it is possible to suppress the execution of autonomous excavation which is not intended by an operator. The problems, configurations, and advantageous effects other than those described above will be clarified by the explanation of the embodiments below.

### BRIEF DESCRIPTION OF DRAWINGS

[FIG. 1] FIG. 1 is a side view of the appearance of a wheel loader according to each embodiment of the present invention, which exemplifies the structure of the wheel loader.
[FIG. 2] FIG. 2 is a perspective view of the wheel loader illustrated in FIG. 1 as viewed from the front left side.
[FIG. 3A] FIG. 3A is a diagram for explaining excavation work to be performed by a wheel loader, and illustrates a scene in which the wheel loader causes a bucket to thrust into a pile.
[FIG. 3B] FIG. 3B is a diagram for explaining excavation work to be performed by a wheel loader, and illustrates a scene in which the wheel loader causes the bucket to perform a tilt operation.
[FIG. 3C] FIG. 3C is a diagram for explaining excavation work to be performed by a wheel loader, and illustrates a scene in which the wheel loader causes the lift arm to raise.
[FIG. 4] FIG. 4 is a system configuration diagram illustrating an example of a configuration of a drive system of a wheel loader according to the first embodiment.
[FIG. 5] FIG. 5 is a functional block diagram illustrating the functions provided in a controller according to the first embodiment.
[FIG. 6] FIG. 6 illustrates a flowchart of a flow of the processing to be executed in a controller according to the first embodiment.
[FIG. 7] FIG. 7 is a system configuration diagram illustrating a configuration example of a drive system of a wheel loader according to the second embodiment.
[FIG. 8] FIG. 8 is a functional block diagram illustrating the functions provided in a controller according to the second embodiment.
[FIG. 9] FIG. 9 illustrates a flowchart of a flow of the processing to be executed in a controller according to the second embodiment.

### DESCRIPTION OF EMBODIMENTS

### (Overall structure of wheel loader 1)

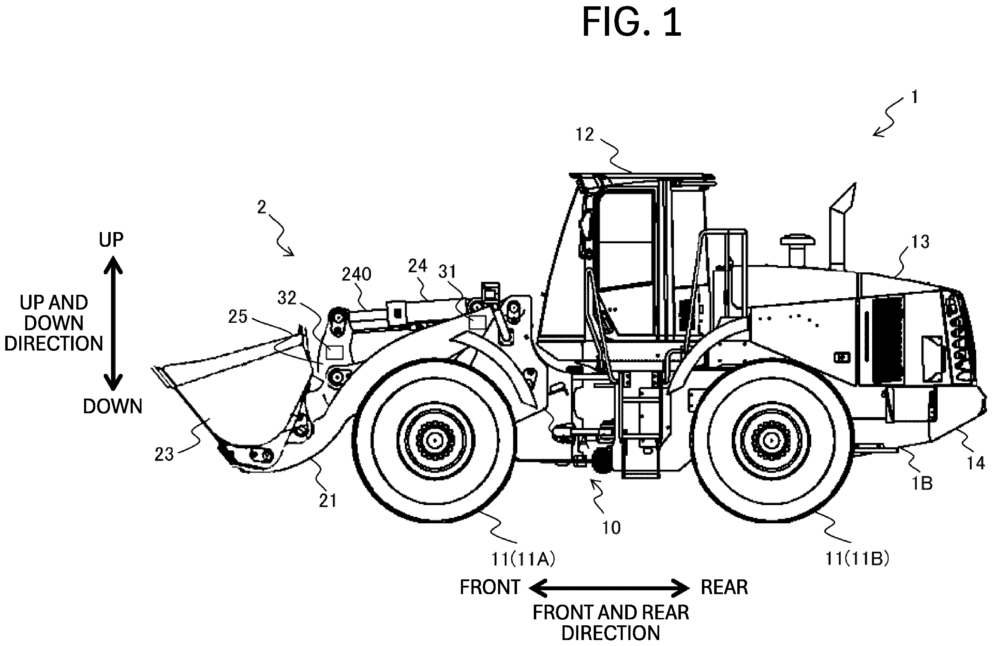

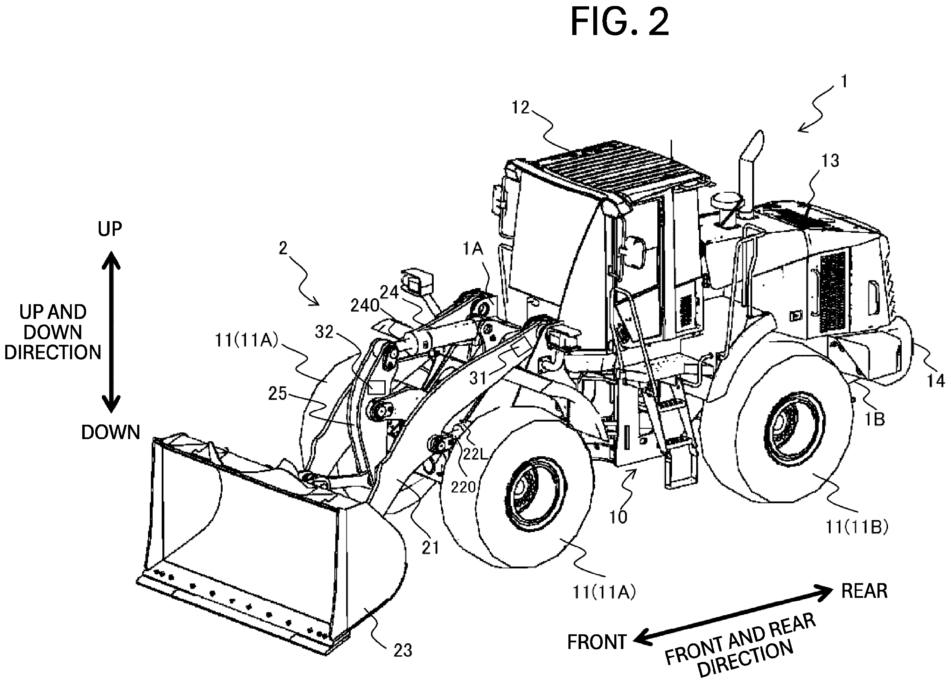

Firstly, the overall structure of a wheel loader 1 according to the embodiments of the present invention will be described with reference to FIG. 1 and FIG. 2.

FIG. 1 is a side view of the appearance of the wheel loader 1 according to each embodiment of the present invention which exemplifies the structure of the wheel loader 1. FIG. 2 is a perspective view of the wheel loader 1 illustrated in FIG. 1 as viewed from the front left side.

The wheel loader 1 is an articulated type work vehicle in which the vehicle body is bent and swiveled on its central portion and steered thereby. In the wheel loader 1, a front frame 1A serving as the front part of the vehicle body and a rear frame 1B serving as the rear part of the vehicle body are connected to each other by a center joint 10 to be swiveled in the left and right direction, which allows the front frame 1A to be bent in the left and right direction with respect to the rear frame 1B. In the following, in the left and right direction of the vehicle body, the left side direction relative to the forward direction is referred to as a "left direction" and the right side direction relative to the forward direction is referred to as a "right direction.

The vehicle body includes four wheels 11, and the two wheels 11 among them are provided, as front wheels 11A, on both the left and right sides of the front frame 1A, respectively, and the remaining two wheels 11 are provided, as rear wheels 11B, on both the left and right sides of the rear frame 1B, respectively. FIG. 1 illustrates, among the four wheels 11, only the front wheel 11A and rear wheel 11B provided on the left side, and FIG. 2 illustrates, among the four wheels 11, only the front wheels 11A provided on the left and right sides and the rear wheel 11B provided on the left side.

On a front portion of the front frame 1A, a hydraulically driven working device 2 used for a loading work, in which a working target object such as earth and sand and minerals is excavated and loaded onto a loading destination, such as a dump truck or a hopper, is provided.

The rear frame 1B includes an operator's cab 12 in which an operator is to get, a machine room 13 for accommodating the equipment necessary for driving the wheel loader 1, and a counterweight 14 for balancing the vehicle body with the working device 2 to prevent the vehicle body from being tilted. On the rear frame 1B, the operator's cab 12 is provided in the front thereof, the counterweight 14 is provided in the rear thereof, and the machine room 13 is provided between the operator's cab 12 and the counterweight 14.

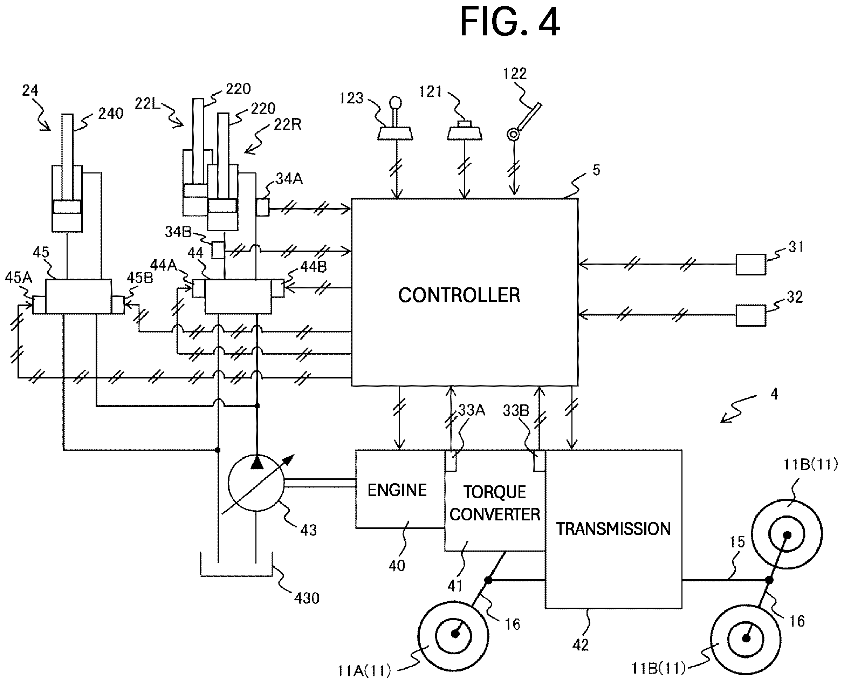

The working device 2 includes a lift arm 21 attached to the front frame 1A to be rotatable in the upward and downward direction, two lift arm cylinders 22L, 22R (see FIG. 4) as a hydraulic cylinder for driving the lift arm 21, a bucket 23 attached to the distal end of the lift arm 21 to be rotatable in the upward and downward direction, a bucket cylinder 24 as a hydraulic cylinder for driving the bucket 23, and a bell crank 25 rotatably connected to the lift arm 21 and serving as a link mechanism between the bucket 23 and the bucket cylinder 24.

The two lift arm cylinders 22L, 22R are arranged side by side in the left and right direction of the vehicle body with a predetermined space therebetween. However, in FIG. 1, the two lift arm cylinders 22L, 22R are not illustrated since they are arranged in the positions hidden by the front wheel 11A provided on the left side, and in FIG. 2, only the lift arm cylinder 22L on the left side is illustrated.

Extension of each of rods 220 of the two lift arm cylinders 22L, 22R causes the lift arm 21 to rotate in the upward direction with respect to the front frame 1A, and contraction of each of the rods 220 of the two lift arm cylinders 22L, 22R causes the lift arm 21 to rotate in the downward direction with respect to the front frame 1A.

On a base end portion of the lift arm 21 (portion of the lift arm 21 which is attached to the front frame 1A), a lift arm sensor 31 for detecting a lift arm angle that is an angle formed between the ground surface that the vehicle body is touching (ground that the four wheels 11 are touching) and the lift arm 21.

Extension of a rod 240 of the bucket cylinder 24 causes the bucket 23 to rotate in the upward direction with respect to the lift arm 21 and tilt rearwardly toward the front frame 1A (vehicle body) (tilt operation), and contraction of the rod 240 of the bucket cylinder 24 causes the bucket 23 to rotate in the downward direction (dumping operation) with respect to the lift arm 21. This allows the bucket 23 to scoop a working target object such as earth and sand and minerals and discharge (dump) it.

The bucket 23 can be replaced with various other attachments such as a blade, which allows the wheel loader 1 to perform the loading work using the bucket 23 and various types of work including the snow removing work, the dozing work, and the like.

An angle of the bucket 23 which is an angle formed by the ground surface that the vehicle body is touching and a bottom surface portion of the bucket 23 can be calculated based on the lift arm angle and a bell crank angle which is a tilt angle of the bell crank 25 relative to the front frame 1A. The bell crank angle is detected by a bell crank angle sensor 32 mounted to the bell crank 25.

This wheel loader 1 can be driven not only by manual operation performed by an operator in the operator's cab 12, but also by remote operation performed by an operator at a place away from the wheel loader 1 (autonomous traveling in which the operator is not present in the operator's cab 12).

### <Excavation work>

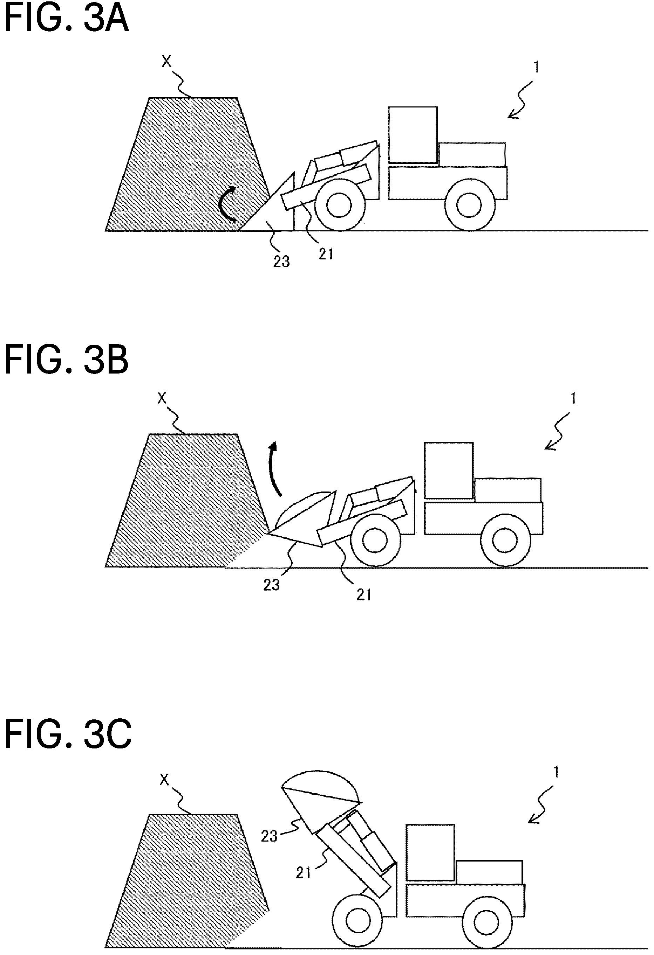

Next, with reference to FIG. 3A to FIG. 3C, excavation work of the wheel loader 1 will be described.

FIG. 3A to FIG. 3C are diagrams for explaining the excavation work of the wheel loader 1, and specifically, FIG. 3A illustrates a scene in which the wheel loader 1 causes the bucket 23 to thrust into a pile X, FIG. 3B illustrates a scene in which the wheel loader 1 causes the bucket 23 to perform a tilt operation, and FIG. 3C illustrates a scene in which the wheel loader 1 causes the lift arm 21 to raise.

In the excavation work of the wheel loader 1, firstly, the working device 2 takes a ground horizontal posture as illustrated in FIG. 3A. In this "ground horizontal posture", the lift arm 21 is in a front-down posture in which, using the ground surface that the vehicle body is touching as a reference of the height, the height of the front end portion of the lift arm 21 is positioned lower than the height of the base end portion thereof serving as the mounting portion to the front frame 1A, and the bucket 23 is in a posture in which the bottom surface thereof is parallel to the ground surface that the vehicle body is touching. In FIG. 3A, the bottom surface of the bucket 23 is in contact with the ground surface that the vehicle body is touching, however, in the ground horizontal posture, the bottom surface of the bucket 23 does not necessarily have to be in contact with the ground surface that the vehicle body is touching, and may be isolated therefrom.

In the state where the working device 2 is in the ground horizontal posture, the wheel loader 1 advances toward the pile X (working target object) made up with earth and sand, minerals, and the like at full throttle, and causes the bucket 23 to thrust into the pile X as illustrated in FIG. 3A.

Subsequently, in response to the manipulation made by the operator for causing the bucket 23 to perform the tilt operation, the wheel loader 1 scoops up earth and sand, minerals, and the like as illustrated in FIG. 3B (excavation of the pile X). Depending on the properties (hardness) of earth and sand, minerals, and the like, and the shape of the pile X, the manipulation above made by the operator includes the lift operation of the lift arm 21, in addition to the tilt operation of the bucket 23.

Then, in response to the manipulation made by the operator for causing the lift arm 21 to perform the lift operation, as illustrated in FIG. 3C, the wheel loader 1 causes the bucket 23 in which earth and sand, minerals, and the like that have been scooped up are loaded to raise further upward.

As described above, the excavation work includes a series of actions, in which the wheel loader 1 brings the working device 2 into the ground horizontal posture and then causes the bucket 23 to thrust into the pile X to scoop up earth and sand, minerals, and the like. In the wheel loader 1, among the series of these actions, in particular, the operations illustrated in FIG. 3B and FIG. 3C, in other words, the lift operation of the lift arm 21 and the tilt operation of the bucket 23 after causing the bucket 23 to thrust into the pile X can be carried out not only by the manual operation performed by the operator in the operator's cab 12 or the remote operation performed by the operator in a place away from the wheel loader 1, but also autonomously carried out by the control performed by a controller, which will be described later (autonomous excavation control).

In the following, an example in which the autonomous excavation control is carried out based on the manual operation performed by the operator in the operator's cab 12 will be described as the first embodiment, and an example in which the autonomous excavation control is carried out based on the remote operation performed by the operator at a place away from the wheel loader 1 will be described as the second embodiment.

### (First embodiment)

Referring to FIG. 4 to FIG. 6, the wheel loader 1 according to the first embodiment of the present invention will be described.

### (Drive system of wheel loader 1)

Firstly, referring to FIG. 4, a drive system of the wheel loader 1 according to the present embodiment will be described.

FIG. 4 is a system configuration diagram illustrating an example of a configuration of a drive system of the wheel loader 1 according to the first embodiment.

In the wheel loader 1 according to the present embodiment, the traveling of the vehicle body is controlled by a traveling device 4 which employs a torque converter type traveling drive system. As illustrated in FIG. 4, the traveling device 4 includes an engine 40 as a power source, a torque converter 41 connected to an output shaft of the engine 40, and a transmission 42 connected to an output shaft of the torque converter 41. The engine 40, the torque converter 41, and the transmission 42 are controlled by a controller 5, respectively.

The engine 40 starts in response to the manipulation of turning on an ignition switch 121 provided in the operator's cab 12 which is performed by an operator, and then rotates in response to the manipulation of stepping on an accelerator pedal 122 which is performed by the operator. The rotational speed of the engine 40 is proportional to the amount of stepping on the accelerator pedal 122, and increases as the amount of stepping on the accelerator pedal 122 increases. An operation signal of the ignition switch 121 and the amount of stepping on the accelerator pedal 122 are input to the controller 5, respectively.

The torque converter 41 has a function for amplifying the torque transmitted from the engine 40 and transmitting the amplified torque to the transmission 42. An output torque Tr increases as a rotational speed Nin of the input shaft (rotational speed of the output shaft of the engine 40) increases relative to a rotational speed Nout of the output shaft.

The torque converter 41 is provided with an input-side rotational speed sensor 33A for detecting the rotational speed Nin of the input shaft (hereinafter, referred to as "input shaft rotational speed Nin") which is mounted to the input side, and an output-side rotational speed sensor 33B for detecting the rotational speed Nout of the output shaft (hereinafter, referred to as "output shaft rotational speed Nout") which is mounted to the output side. Each of the input shaft rotational speed Nin and the output shaft rotational speed Nout is an aspect of a load applied to the traveling device 4, and each of the input-side rotational speed sensor 33A and the output-side rotational speed sensor 33B corresponds to a second load detection device for detecting a load applied to the traveling device **4.**

The input shaft rotational speed Nin detected by the input-side rotational speed sensor 33A and the output shaft rotational speed Nout detected by the output-side rotational speed sensor 33B are input to the controller 5, respectively. The controller 5 calculates the output torque Tr of the torque converter 41 based on the input-shaft rotational speed Nin and output-shaft rotational speed Nout as acquired.

The transmission 42 is an autonomous transmission that includes a clutch mechanism having a plurality of clutches and a gear mechanism having a multi-stage shifting gear, and switches the forward and reverse traveling of the vehicle body based on a switching operation performed on the forward and reverse traveling switching device, and also shifts the rotational speed of the output shaft of the torque converter 41 based on the speed stage selected by a shift switch. The rotational speed shifted by the transmission 42 is transmitted to each of the four wheels 11 via a drive shaft 15 and an axle 16, whereby the wheel loader 1 travels.

Furthermore, in the wheel loader 1 according to the present embodiment, the operations of the working device 2 are controlled by a working drive system. As illustrated in FIG. 4, the working drive system includes the engine 40, a variable displacement hydraulic pump 43 which is driven by the engine 40, a hydraulic oil tank 430 which stores therein hydraulic oil pumped by the hydraulic pump 43, a lift arm directional control valve 44 which controls the flow (direction and flow rate) of the hydraulic oil supplied to the lift arm cylinders 22, a bucket directional control valve 45 which controls the flow of the hydraulic oil supplied to the bucket cylinder 24, a pair of lift arm solenoid control valves 44A, 44B which controls the lift arm directional control valve 44 based on drive command signals output from the controller 5, and a pair of bucket directional control valves 45A, 45B which controls the bucket directional control valve 45 based on drive command signals output from the controller 5.

The hydraulic pump 43 does not necessarily have to be of a variable displacement pump, and may be, for example, a fixed displacement pump.

The lift arm directional control valve 44 is provided between the hydraulic pump 43 and the two lift arm cylinders 22, and controls the flow of the hydraulic oil discharged from the hydraulic pump 43 and introduced to the two lift arm cylinders 22L, 22R, respectively.

The bucket directional control valve 45 is provided between the hydraulic pump 43 and the bucket cylinder 24, and controls the flow of the hydraulic oil discharged from the hydraulic pump 43 and introduced to the bucket cylinder 24.

In the present embodiment, the lift arm solenoid control valves 44A, 44B and the bucket solenoid control valves 45A, 45B are controlled, respectively, based on manipulation performed on a working operation lever 123 as an operation device provided in the operator's cab 12.

For example, when the operator manipulates the operation lever 123 to cause the lift arm 21 to raise, a lift arm lift operation signal is output from the operation lever 123 to the controller 5. The controller 5 outputs the drive command signals based on the obtained lift arm lift operation signal to the lift arm solenoid control valves 44A, 44B. The lift arm solenoid control valves 44A, 44B control the operations of the lift arm directional control valve 44 so as to connect the hydraulic pump 43 and the bottom chambers of the two lift arm cylinders 22L, 22R, respectively.

This causes the hydraulic oil discharged from the hydraulic pump 43 to flow into the bottom chambers of the two lift arm cylinders 22L, 22R, respectively, and thus the rods 220 to extend, respectively, so that the lift arm 21 moves upward.

The lift arm cylinder 22R which is one of the two lift arm cylinders 22L, 22R is provided with a rod pressure sensor 34A for detecting a rod pressure Pr which is an internal pressure of the rod chamber and a bottom pressure sensor 34B for detecting a bottom pressure Pb which is an internal pressure of the bottom chamber. In FIG. 4, the rod pressure sensor 34A and the bottom pressure sensor 34B are mounted to the lift arm cylinder 22R on the right side, however, they may be mounted to the lift arm cylinder 22L on the left side.

Each of the rod pressure Pr and the bottom pressure Pb is an aspect of a load applied to the lift arm 21, and each of the rod pressure sensor 34A and the bottom pressure sensor 34B corresponds to a first load detection device for detecting the load applied to the lift arm 21.

Furthermore, for example, when the operator manipulates the working operation lever 123 so as to cause the bucket 23 to tilt, a tilt operation signal is output from the working operation lever 123 to the controller 5. The controller 5 outputs the drive command signals based on the acquired tilt control signal to the bucket solenoid control valves 45A, 45B. The bucket solenoid control valves 45A, 45B control the operations of the bucket directional control valve 45 so as to connect the hydraulic pump 43 and the bottom chamber of the bucket cylinder 24.

This causes the hydraulic oil discharged from the hydraulic pump 43 to flow into the bottom chamber of the bucket cylinder 24 and thus the rod 240 to extend, so that the bucket 23 performs the tilt operation (raising operation).

Still further, the wheel loader 1 according to the present embodiment has a detent function for holding the working device 2 in the ground horizontal posture by the control of the controller 5 in response to the manipulation of moving the working operation lever 123 to an operation end position. Using this detent function, the operator does not have to manipulate the working operation lever 123 gradually and frequently until the working device 2 takes the ground horizontal posture from the current posture, and this allows the operator to concentrate on performing other manipulations and the like during that time.

In other words, the working operation lever 123 according to the present embodiment has a lift arm detent position and a bucket detent position for holding the working device 2 in the ground horizontal posture.

Specifically, in response to the manipulation of the working operation lever 123 made by the operator for moving it to the operation end position on one side which is the lift arm detent position, a lift arm detent operation signal is output from the working operation lever 123 to the controller 5.

The controller 5 outputs lift arm detent command signals to the lift arm solenoid control valves 44A, 44B based on the acquired lift arm detent operation signal and the cylinder length of the lift arm cylinders 22 calculated based on the lift arm angle acquired from the lift arm angle sensor 31, so as to carry out the detent control (lift arm detent control) for the lift arm 21.

This causes the lift arm 21 to move from the current position to the position corresponding to the ground horizontal posture and to be held therein by the control of the controller 5, even in absence of the manipulation of the working operation lever 123 by the operator.

For example, in the case where the current position of the lift arm 21 is higher than the position corresponding to the ground horizontal posture, the controller 5 outputs the lift arm detent command signals for causing the lift arm 21 to perform a lowering operation to the lift arm solenoid control valves 44A, 44B.

In the same manner, in response to the manipulation of the working operation lever 123 made by the operator for moving it to an operation end position on the other side which is the bucket detent position, a bucket detent operation signal is output from the working operation lever 123 to the controller 5.

The controller 5 outputs the bucket detent command signals to the bucket solenoid control valves 45A, 45B based on the acquired bucket detent control signal and the cylinder length of the bucket cylinder 24 calculated based on the lift arm angle acquired from the lift arm angle sensor 31 and the bell crank angle acquired from the bell crank angle sensor 32 so as to carry out the detent control (bucket detent control) for the bucket 23.

Thus, the bucket 23 moves from the current position to the position corresponding to the ground horizontal posture and is held therein by the control of the controller 5 even in absence of the manipulation of the working operation lever 123 by the operator.

For example, in the case where the bucket 23 in the current position is tilting rearward more than that in the position corresponding to the ground horizontal posture, the controller 5 outputs the bucket detent command signals for causing the bucket 23 to perform the dump operation to the bucket solenoid control valves 45A, 45B. On the other hand, in the case where the bucket 23 in the current position is tilting forward more than that in the position corresponding to the ground horizontal posture, the controller 5 outputs the bucket detent command signals for causing the bucket 23 to perform the tilt operation to the bucket solenoid control valves 45A, 45B.

In the wheel loader 1, the controller 5 does not necessarily have to carry out both the lift arm detent control and the bucket detent control in order to hold the working device 2 in the ground horizontal posture using the detent function, and for example, may carry out the detent control only for the operations of the bucket 23, while carrying out the control for the operations of the lift arm 21 based on the manipulation of the working operation lever 123.

As mentioned before, in the wheel loader 1 according to the present embodiment, the autonomous excavation control by the controller 5 enables the working device 2 to autonomously operate to excavate a working target object (pile X) even in absence of the manipulation of the working operation lever 123 by the operator. This autonomous excavation control by the controller 5 becomes active in response to, for example, the manipulation of turning on an autonomous excavation start switch provided in the operator's cab 12 which is performed by the operator.

In the present embodiment, both the lift arm 21 and the bucket 23 are operated in response to the manipulation of the single working operation lever 123, however, the present invention is not limited thereto, and they may be operated by separated operation levers, respectively. That is, the operator's cab 12 may be provided with a lift arm operation lever for operating the lift arm 21 and a bucket operation lever for operating the bucket 23, respectively.

### (Configuration of controller 5)

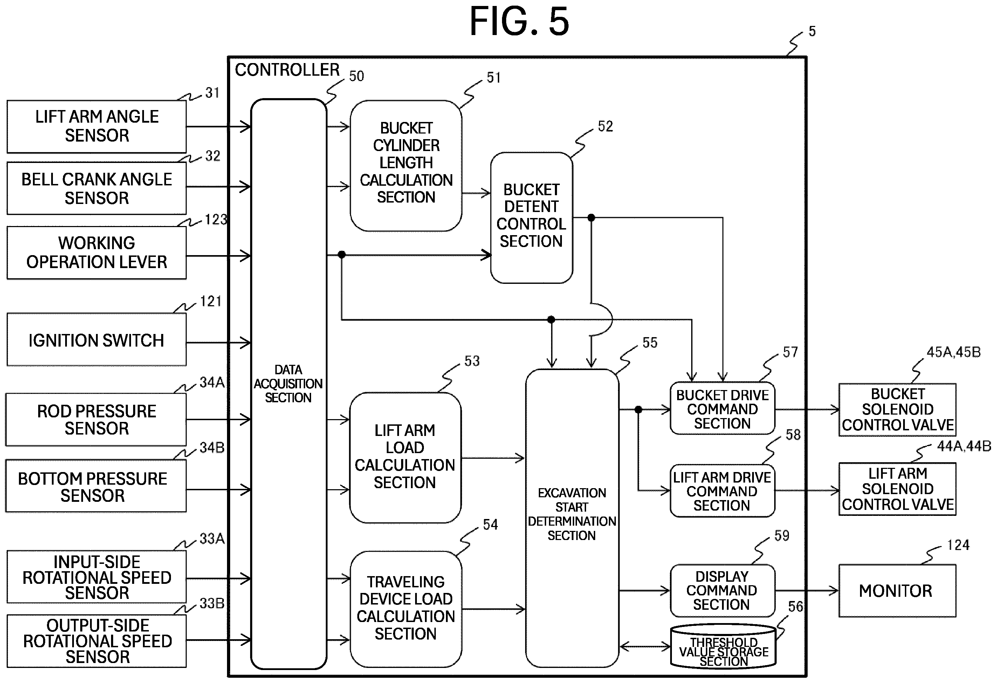

Next, referring to FIG. 5, the configuration of the controller 5 will be described.

FIG. 5 is a functional block diagram illustrating the functions provided in the controller 5 according to the first embodiment.

The controller 5 are configured with a CPU, a RAM, a ROM, an HDD, an input I/F, and an output I/F, which are connected to each other via a bus. Various operation devices such as the ignition switch 121 and the working operating lever 123, and various sensors such as the lift arm angle sensor 31, the bell crank angle sensor 32, the input-side rotational speed sensor 33A, the output-side rotational speed sensor 33B, the rod pressure sensor 34A, and the bottom pressure sensor 34B are connected to the input I/F, and the lift arm solenoid control valves 44A, 44B, the bucket solenoid control valves 45A, 45B, and a monitor 124 as a notification device are connected to the output I/F.

The monitor 124 is provided in the operator's cab 12, and displays that the controller 5 is determining the start of excavation of a working target object (pile X). The processing of determining the start of excavation of a working target object, which is executed in the controller 5, will be described later.

In this hardware configuration, the CPU reads a control program (software) stored in a recording medium such as the ROM, the HDD, or an optical disc, and loads and executes it in the RAM so as to cause the control program and the hardware to cooperate, thereby realizing the functions provided in the controller 5.

In the present embodiment, the configuration of the controller 5 is described as the combination of software and hardware, however, the present invention is not limited thereto, and an integrated circuit for implementing the functions of a control program to be executed in the wheel loader 1 may be used.

As illustrated in FIG. 5, the controller 5 includes a data acquisition section 50, a bucket cylinder length calculation section 51, a bucket detent control section 52, a lift arm load calculation section 53, a traveling device load calculation section 54, an excavation start determination section 55, a threshold value storage section 56, a bucket drive command section 57, a lift arm drive command section 58, and a display command section 59.

The data acquisition section 50 acquires an ON signal (in other words, a start signal of the engine 40) output from the ignition switch 121 and an operation signal output from the working operation lever 123, and the data relating to the lift arm angle detected by the lift arm angle sensor 31, the bell crank angle detected by the bell crank angle sensor 32, the rod pressure Pr of the lift arm cylinder 22 detected by the rod pressure sensor 34A, the bottom pressure Pb of the lift arm cylinder 22 detected by the bottom pressure sensor 34B, the input shaft rotational speed Nin of the torque converter 41 detected by the input-side rotational speed sensor 33A, and the output shaft rotational speed Nout of the torque converter 41 detected by the output-side rotational speed sensor 33B, respectively.

The bucket cylinder length calculation section 51 calculates the cylinder length of the bucket cylinder 24 based on the lift arm angle and the bell crank angle (in other words, the bucket angle) acquired by the data acquisition section 50. The cylinder length of the bucket cylinder 24 calculated by the bucket cylinder length calculation section 51 corresponds to the data relating to the current position (posture) of the bucket 23. The cylinder length of the bucket cylinder 24 may be the length of the rod 240 or the whole length of the bucket cylinder 24.

In the present embodiment, the controller 5 calculates the cylinder length of the bucket cylinder 24 based on the lift arm angle and the bell crank angle, however, the present invention is not limited thereto, and the cylinder length of the bucket cylinder 24 may be detected using, for example, a displacement meter mounted to the bucket cylinder 24. That is, the controller 5 does not necessarily have to include the bucket cylinder length calculation section 51.

The bucket detent control section 52 decides the control content (bucket detent control content) for the bucket solenoid control valves 45A, 45B based on the bucket detent operation signal acquired by the data acquisition section 50 and the cylinder length of the bucket cylinder 24 calculated by the bucket cylinder length calculation section 51. Specifically, the bucket detent control section 52 decides the control content relating to the actions of the bucket 23, such as how the bucket 23 should be operated from the current position to the position corresponding to the ground horizontal posture.

The lift arm load calculation section 53 calculates a force F (hereinafter, referred to as "lift arm force F") applied to the lift arm 21 based on the rod pressure Pr and the bottom pressure Pb of the lift arm cylinder 22 acquired by the data acquisition section 50.

In the present embodiment, the controller 5 calculates the lift arm force F based on the rod pressure Pr and the bottom pressure Pb of the lift arm cylinder 22, however, the present invention is not limited thereto, and the lift arm force F may be detected using, for example, a strain gage mounted to the lift arm cylinder 22. That is, the controller 5 does not necessarily have to include the lift arm load calculation section 53.

Furthermore, the lift arm load calculation section 53 only has to calculate the load (change in the physical quantity) applied to the lift arm 21, but does not necessarily have to calculate the force per se applied to the lift arm 21.

The traveling device load calculation section 54 calculates the output torque Tr of the torque converter 41 based on the input shaft rotational speed Nin and the output shaft rotational speed Nout of the torque converter 41 acquired by the data acquisition section 50. In the present embodiment, the output torque Tr of the torque converter 41 is calculated as the load applied to the traveling device 4 since the traveling device 4 employs a torque converter type traveling drive system, however, for example, in the case where the traveling device 4 employs an HST type traveling drive system, the load applied to the traveling device 4 is calculated based on the discharge pressure of the traveling hydraulic pump (HST pump) and the vehicle speed.

The excavation start determination section 55 determines whether the state of the wheel loader 1 satisfies an excavation start condition. In the present embodiment, the "excavation start condition" includes the following conditions that: the bucket detent control content has been decided (processing relating to the bucket detent control has been executed) by the bucket detent control section 52, the lift arm force F calculated by the lift arm load calculation section 53 is more than a predetermined working device load Fth (F>Fth), and the output torque Tr of the torque converter 41 calculated by the travelling device load calculation section 54 is more than a predetermined travelling device load Trth (Tr>Trth).

As described above, for performing the excavation work, the wheel loader 1 brings the working device 2 in the ground horizontal posture (the posture illustrated in each of FIG. 2 and FIG. 3A), and at this time, at least the bucket detent control is carried out. Therefore, the excavation start condition includes the condition that the controller 5 has executed the processing relating to the bucket detent control.

Furthermore, as described above, upon starting excavation of the working target object, the wheel loader 1 causes the bucket 23 to thrust into the working target object (see FIG. 3A), and thus at this time, the lift arm force F and the output torque Tr of the torque converter 41 increase. Therefore, the excavation start condition includes the condition that the lift arm force F is more than the predetermined working device load Fth (F>Fth) and the output torque Tr of the torque converter 41 is more than the predetermined travelling device load Trth (Tr>Trth).

The "predetermined working device load Fth" refers herein to, for example, a minimum load that can be applied to the lift arm 21 (that may act on the lift arm 21) when the wheel loader 1 causes the bucket 23 to thrust into the working target object. The "predetermined traveling device load Trth" refers herein to, for example, a minimum load that can be applied to the traveling device 4 (that may act on the traveling device 4) when the wheel loader 1 causes the bucket 23 to thrust into the working target object.

The condition that the output torque Tr of the torque converter 41 is more than the predetermined traveling device load Trth (Tr>Trth) does not necessarily have to be included in the excavation start condition, however, determination of the start of excavation can be accurately made if it is included in the excavation start condition.

In other words, the "excavation start condition" only has to include at least the following conditions that: the bucket detent control content has been decided by the bucket detent control section 52 and the lift arm force F calculated by the lift arm load calculation section 53 is more than the predetermined working device load Fth (F>Fth). Thus, the controller 5 may not include the traveling device load calculation section 54 in the case where the excavation start determination section 55 makes determination of the start of excavation using the minimum excavation start condition.

In the case where the state of the wheel loader 1 satisfies the excavation start condition, the excavation start determination section 55 determines that "excavation of the working target object will start".

On the other hand, in the case where the state of the wheel loader 1 does not satisfy the excavation start condition, in other words, in the present embodiment, if either of the following conditions is satisfied: the processing relating to the bucket detent control has not been executed; the lift arm force F is equal to or less than the predetermined working device load Fth (F≤Fth); or the output torque Tr of the torque converter 41 is equal to or less than the predetermined travelling device load Trth (Tr≤Trth), the bucket 23 has not thrusted into the working target object. In this case, there is a possibility that the excavation of the working target object will not start, in other words, operations other than excavation (for example, operations relating to leveling work) may start, and therefore, the excavation start determination section 55 does not make determination that "excavation of the working target object will start".

In the present embodiment, in the case where the data acquisition section 50 acquires the bucket operation signal relating to the operations of the bucket 23 from the working operation lever 123 after the bucket detent control content is determined by the bucket detent control section 52, the excavation start determination section 55 determines that excavation of the working target object will start if the following conditions are satisfied: the lift arm force F calculated by the lift arm load calculation section 53 is more than a predetermined first working device load Fth1 (F>Fth1); and the output torque Tr of the torque converter 41 calculated by the travelling device load calculation section 54 is more than a predetermined first travelling device load Trth1 (Tr>Trth1).

In the case where the bucket detent control content has not been decided by the bucket detent control section 52, in other words, in the case where the processing relating to the bucket detent control has not been executed, the excavation start determination section 55 determines that excavation of the working target object will start if the following conditions are satisfied: the lift arm force F calculated by the lift arm load calculation section 53 is more than the first working device load Fth1 (F>Fth1); and the output torque Tr of the torque converter 41 calculated by the travelling device load calculation section 54 is more than the first travelling device load Trth1 (Tr>Trth1).

Furthermore, in the case where the data acquisition section 50 does not acquire the bucket operation signal relating to the operations of the bucket 23 from the operation lever 123 after the bucket detent control content is decided by the bucket detent control section 52, the excavation start determination section 55 determines that excavation of the working target object will start if the following conditions are satisfied: the lift arm force F calculated by the lift arm load calculation section 53 is more than a second working device load Fth2 (F>Fth2) which is set to a value less than the first working device load Fth1 (<Fth1); and the output torque Tr of the torque converter 41 calculated by the travelling device load calculation section 54 is more than a second travelling device load Trth2 (Tr>Trth2) which is set to a value less than the first travelling device load Trth1 (<Trth1).

The threshold value storage section 56 is a memory, and retains the first working device load Fth1 and the second working device load Fth2 each of which serves as the predetermined working device load Fth, and the first travelling device load Trth1 and the second travelling device load Trth2 each of which serves as the predetermined travelling device load Trth. Each of the predetermined working device load Fth and the predetermined travelling device load Trth does not necessarily have to be a predetermined set value, and may be weighted as in the present embodiment.

The bucket drive command section 57 outputs a drive command signal according to the bucket detent control content, which has been decided by the bucket detent control section 52, to the bucket solenoid control valves 45A, 45B. In the case where the excavation start determination section 55 determines that "excavation of the working target object will start", the bucket drive command section 57 outputs drive command signals relating to a tilt operation to the bucket solenoid control valves 45A, 45B as drive command signals relating to the autonomous excavation control.

In the case where the excavation start determination section 55 determines that "excavation of the working target object will start", the lift arm drive command section 58 outputs the drive command signals relating to the lift operation to the lift arm solenoid control valves 44A, 44B as the drive command signals relating to the autonomous excavation control.

In the autonomous excavation of the working target object, in the case where excavation is completed only by performing the tilt operation of the bucket 23, the lift arm drive command section 58 does not output the drive command signals relating to the autonomous excavation control to the lift arm solenoid control valves 44A, 44B. In other words, in the case where the excavation start determination section 55 determines that "excavation of the working target object will start", the controller 5 outputs the drive command signals relating to the tilt operation to at least the bucket solenoid control valves 45A, 45B.

As described above, the controller 5 executes the processing relating to the autonomous excavation control in the case where the state of the wheel loader 1 satisfies the excavation start condition and it is determined that "excavation of the working target object will start".

In the present embodiment, the lift arm 21 is operated to the position corresponding to the ground horizontal posture by means of a manual operation using the working operation lever 123 performed by the operator, and thus the controller 5 does not carry out the lift arm detent control. However, the present invention is not limited thereto, and the detent control may be carried out for the lift arm 21. In this case, the controller 5 includes a lift arm detent control section, and the lift arm drive command section 58 outputs the drive command signals to the lift arm solenoid control valves 44A, 44B, respectively, in accordance with the lift arm control content decided by the lift arm detent control section.

In the case where the data acquisition section 50 does not acquire the bucket operation signal relating to the operations of the bucket 23 from the working operation lever 123 after the bucket detent control content is decided by the bucket detent control section 52, the display command section 59 outputs a notification signal (specifically, a display signal of "excavation start determination in progress") for notifying that the start of excavation of the working target object is being determined to the monitor 124.

In the case where the monitor 124 is not configured to display "excavation start determination in progress", the controller 5 may not include the display command section 59.

### (Processing in controller 5)

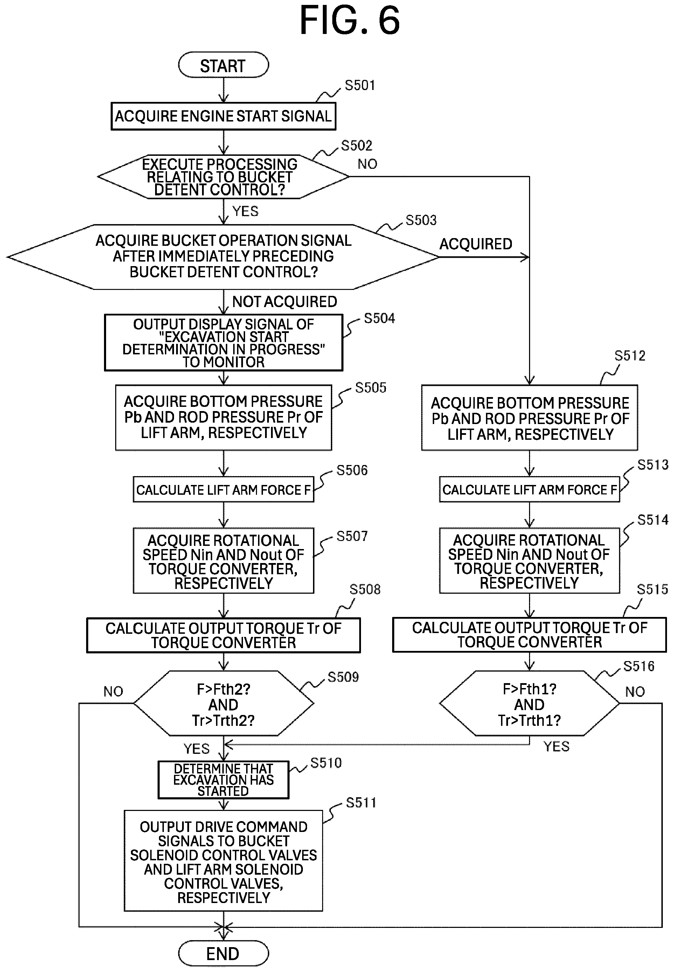

Next, referring to FIG. 6, a flow of the processing to be executed in the controller 5 will be described.

FIG. 6 illustrates a flowchart of a flow of the processing to be executed in the controller 5.

In the controller 5, firstly, the data acquisition section 50 acquires an ON signal of the ignition switch 121, in other words, a start signal of the engine 40 (step S501).

Next, the controller 5 determines whether the bucket detent control section 52 has executed the processing relating to the bucket detent control, in other words, whether the bucket detent control section 52 has decided the bucket detent control content based on the bucket detent operation signal acquired by the data acquisition section 50 and the cylinder length of the bucket cylinder 24 calculated by the bucket cylinder length calculation section 51 (step S502).

In the case where it is determined in step S502 that the bucket detent control section 52 has executed the processing relating to the bucket detent control (step S502/YES), then the controller 5 determines whether the data acquisition section 50 has acquired the bucket operation signal from the working operation lever 123 (step S503). In other words, in step S503, it is determined whether the bucket operation signal has been acquired by the data acquisition section 50 after the immediately preceding (latest) bucket detent control.

In step S503, in the case where it is determined that the data acquisition section 50 has not acquired the bucket operation signal from the operation lever 123 (step S503/ NOT ACQUIRED), the display command section 59 outputs a display signal of "excavation start determination in progress" to the monitor 124 (step S504).

Next, the data acquisition section 50 acquires the rod pressure Pr of the lift arm cylinder 22 detected by the rod pressure sensor 34A and the bottom pressure Pb of the lift arm cylinder 22 detected by the bottom pressure sensor 34B (step S505).

Subsequently, the lift arm load calculation section 53 calculates the lift arm force F based on the rod pressure Pr and the bottom pressure Pb of the lift arm cylinder 22 acquired in step S505 (step S506).

Next, the data acquisition section 50 acquires the input shaft rotational speed Nin of the torque converter 41 detected by the input-side rotational speed sensor 33A and the output shaft rotational speed Nout of the torque converter 41 detected by the output-side rotational speed sensor 33B (step S507).

Subsequently, the traveling device load calculation section 54 calculates the output torque Tr of the torque converter 41 based on the input shaft rotational speed Nin and the output shaft rotational speed Nout of the torque converter 41 acquired in step S507 (step S508).

Next, the excavation start determination section 55 determines whether the lift arm force F calculated in step S506 is more than the second working device load Fth2 (F>Fth2) which is set to a value less than the first working device load Fth1 (<Fth1), and also the output torque Tr of the torque converter 41 calculated in step S508 is more than the second travelling device load Trth2 (Tr>Trth2) which is set to a value less than the first travelling device load Trth1 (<Trth1).

In step S509, in the case where it is determined that the lift arm force F is more than the second working device load Fth2 (F>Fth2) which is set to a value less than the first working device load Fth1 (<Fth1) and also the output torque Tr of the torque converter 41 is more than the second travelling device load Trth2 (Tr>Trth2) which is set to a value less than the first travelling device load Trth1 (<Trth1) (step S509/YES), the excavation start determination section 55 determines that "excavation has started" (step S510).

Then, the bucket drive command section 57 outputs the drive command signals relating to the tilt operation to the bucket solenoid control valves 45A, 45B, respectively, and the lift arm drive command section 58 outputs the drive command signals relating to the lift operation to the lift arm solenoid control valves 44A, 44B, respectively (step S511), and then the processing in the controller 5 ends.

On the other hand, in step S509, in the case where it is determined that the lift arm force F is equal to or less than the second working device load Fth2 or the output torque Tr of the torque converter 41 is equal to or less than the second travelling device load Trth2 (F≤Fth2 or Tr≤Trth2) (step S509/NO), the processing in the controller 5 ends.

In the case where it is determined in step S502 that the bucket detent control section 52 has not executed the processing relating to the bucket detent control (step S502/NO), and also it is determined in step S503 that the data acquisition section 50 has acquired the bucket operation signal from the working operation lever 123 (step S503/ ACQUIRED), in the same manner as the process in step S505, the data acquisition section 50 acquires the rod pressure Pr of the lift arm cylinder 22 detected by the rod pressure sensor 34A and the bottom pressure Pb of the lift arm cylinder 22 detected by the bottom pressure sensor 34B (step S512).

Subsequently, in the same manner as the process in step S506, the lift arm load calculation section 53 calculates the lift arm force F based on the rod pressure Pr and the bottom pressure Pb of the lift arm cylinder 22 acquired in step S512 (step S513).

Next, in the same manner as the process in step S507, the data acquisition section 50 acquires the input shaft rotational speed Nin of the torque converter 41 detected by the input-side rotational speed sensor 33A and the output shaft rotational speed Nout of the torque converter 41 detected by the output-side rotational speed sensor 33B (step S514).

Subsequently, in the same manner as the process in step S508, the traveling device load calculation section 54 calculates the output torque Tr of the torque converter 41 based on the input shaft rotational speed Nin and the output shaft rotational speed Nout of the torque converter 41 acquired in step S514 (step S515).

Next, the excavation start determination section 55 determines whether the lift arm force F calculated in step S513 is more than the first working device load Fth1 (F>Fth1), and also whether the output torque Tr of the torque converter 41 calculated in step S515 is more than the first travelling device load Trth1 (Tr>Trth1) (step S516).

In step S516, in the case where it is determined that the lift arm force F is more than the first working device load Fth1 (F>Fth1) and the output torque Tr of the torque converter 41 is more than the first travelling device load Trth1 (Tr>Trth1) (step S516/YES), the processing proceeds to step S510 and the excavation start determination section 55 determines "excavation has started", and subsequently, the processing proceeds to step S511 and the processing relating to the autonomous excavation control is executed.

On the other hand, in step S516, in the case where it is determined that the lift arm force F is equal to or less than the first working device load Fth1 or the output torque Tr of the torque converter 41 is equal to or less than the first traveling device load Trth1 (F≤Fth1 or Tr≤Trth1) (step S516/NO), the processing in the controller 5 ends in the same manner as the process in step S509/NO.

As described above, the controller 5 makes determination as to whether excavation of the working target object has started not only based on the magnitude of the lift arm force F (in other words, load applied to the lift arm 21), but also based on the determination made as to whether the processing relating to the bucket detent control is being executed. Therefore, erroneous determination in which the start of excavation is erroneously determined although operations other than the excavation is being performed is hardly made as compared to the case of making the determination only based on the magnitude of the lift arm force F. This can prevent the execution of autonomous excavation which is not intended by an operator.

Operations other than the excavation includes, in particular, a leveling work for making the ground surface (ground surface that the vehicle body is touching) flat. For performing the leveling work, firstly, the wheel loader 1 brings the working device 2 into the ground horizontal posture in the same manner as the case of starting the excavation work. Subsequently, the wheel loader 1 travels at a low speed while pressing the bottom surface of the bucket 23 against the ground. When starting the leveling work, the above-mentioned operation in which the bottom surface of the bucket 23 is pressed against the ground causes the lift arm force F to increase in the same manner as the case of starting the excavation work, which easily causes the erroneous determination of "excavation has started".

In the leveling work, the working device 2 does not necessarily have to take the ground horizontal posture accurately, and may be in a posture in which the bottom surface of the bucket 23 tilts to some extent relative to the ground as long as at least the distal end of the bucket 23 (end portion of the bottom surface which is positioned on the opening side of the bucket 23) is in contact with the ground. Thus, in the leveling work, the operator does not use the bucket detent function, unlike in the excavation work.

In the present embodiment, the controller 5 makes determination as to whether the processing relating to the bucket detent control is being executed, so that erroneous determination of "the start of excavation " can be avoided when the action relating to the leveling work is started. This enables the start of excavation to be determined with high accuracy.

Furthermore, for making the determination of the start of excavation with high accuracy by the controller 5, structure modification, such as changing the shape of the bucket 23, is not required, and therefore, the shape of the bucket 23 is not limited in the present embodiment, unlike in the case of the prior art described above.

Still further, in the present embodiment, the second working device load Fth2 less than the first working device load Fth1 which is the load when the bucket operation by means of the working operation lever 123 is performed after the immediately preceding bucket detent control is set to the predetermined working device load Fth, as it can be determined that the excavation of a working target object is highly likely to start in the case where the bucket operation by means of the working operation lever 123 is not performed after the immediately preceding bucket detent control. This allows the controller 5 to efficiently determine the start of excavation, and thus smoothly proceed to the processing relating to the autonomous excavation control.

On the other hand, in the case where the bucket operation by means of the working operation lever 123 is performed after the immediately preceding bucket detent control, both the possibility that operations other than the excavation have started and the possibility that the excavation has started can be considered. Therefore, in order to prevent erroneous determination from being made, the first working device load Fth1 more than the second working device load Fth2 which is the load when the bucket operation by means of the working operation lever 123 is not performed after the immediately preceding bucket detent control is set to the predetermined working device load Fth. It should be note that the same advantageous operations and effects can be obtained for the predetermined traveling device load Trth.

Still further, in the present embodiment, the monitor 124 displays "excavation start determination in progress" in the case where the bucket operation by means of the working operation lever 123 is not performed after the immediately preceding bucket detent control. This lets the operator know that the start of excavation is being determined using the second working device load Fth2 as the predetermined working device load Fth.

### <Second embodiment>

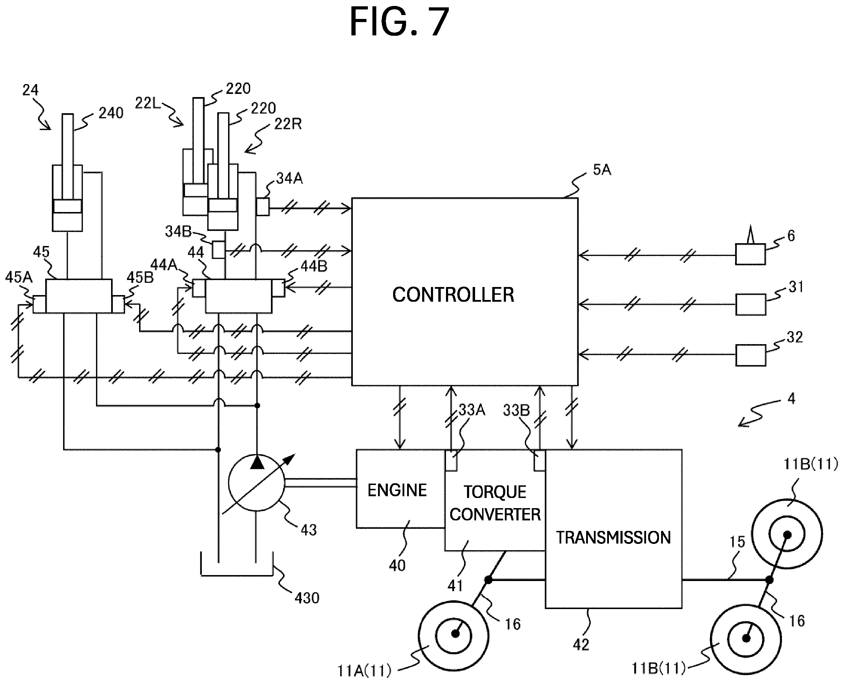

Next, referring to FIG. 7 to FIG. 9, the wheel loader 1 according to the second embodiment of the present invention will be described. In FIG. 7 to FIG. 9, the components common to those described for the first embodiment are provided with the same reference signs, and in the following, will not be explained in detail.

FIG. 7 is a system configuration diagram illustrating a configuration example of a drive system of the wheel loader 1 according to the second embodiment.

In the wheel loader 1 according to the present embodiment, as illustrated in FIG. 7, a controller 5A is connected to a remote control device 6 so as to communicate therewith, and the operator who is located away from the wheel loader 1 operates the remote control device 6 to remotely control the working device 2 (the lift arm 21 and the bucket 23). The remote control of the wheel loader 1 is applied not only to the operation control of the working device 2 but also to the travel control of the vehicle body.

The controller 5A acquires various remote control signals from the remote control device 6, and based on the acquired various remote control signals, controls a traveling drive system including the engine 40, the torque converter 41, and the transmission 42, and also controls a working drive system including the pair of lift arm solenoid control valves 44A, 44B and the pair of bucket solenoid control valves 45A, 45B.

The remote control device 6 includes, for example, an engine start switch for starting the engine 40, a forward and reverse changeover switch for switching the forward and reverse traveling of the vehicle body, a speed stage selection switch for selecting a speed stage, a steering operation switch for steering, a brake switch for stopping the vehicle body, and a working operation switch for operating the working device 2.

Furthermore, the remote control device 6 includes an excavation work start switch for starting the excavation work of a working target object by remote control. In response to the manipulation for turning on the excavation work start switch, the remote control device 6 outputs an excavation work start signal for starting the excavation work of a working target object to the controller 5A. By manipulating the excavation work start switch to turn it on, the operator can cause the wheel loader 1 to perform the excavation work without manipulating the working operation switch.

That is, in response to the manipulation for turning on the excavation work start switch, the controller 5A executes the processing relating to the bucket detent control (control for holding the bucket 23 in a posture in which the bottom surface of the bucket 23 is parallel to the ground surface that the vehicle body is touching) and the processing relating to the lift arm detent control (control for holding the lift arm 21 in a posture in which the position of the front end portion of the lift arm 21 is lower than that in the horizontal posture of the lift arm 21), and in the case where the excavation work continues, the controller 5A executes the processing relating to the autonomous excavation control. The holding posture of the bucket 23 in the bucket detent control does not necessarily have to be the posture in which the bottom surface of the bucket 23 is parallel to the ground surface that the vehicle body is touching, and may be a posture in which the bucket tilts to some extent in either the front or the rear direction relative to the parallel posture of the bucket 23 as long as it does not disturb the excavation work.

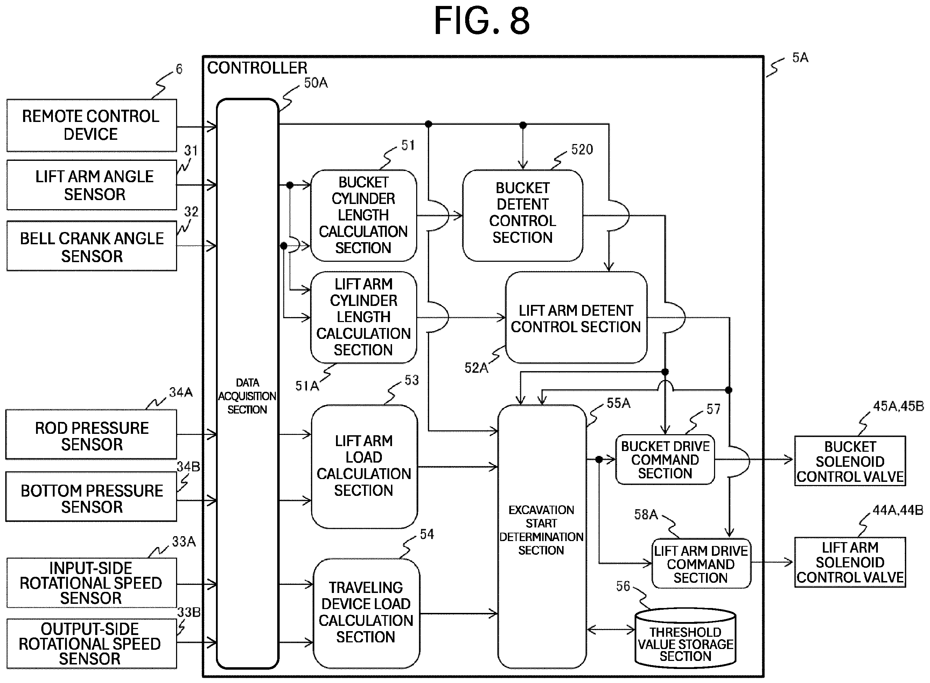

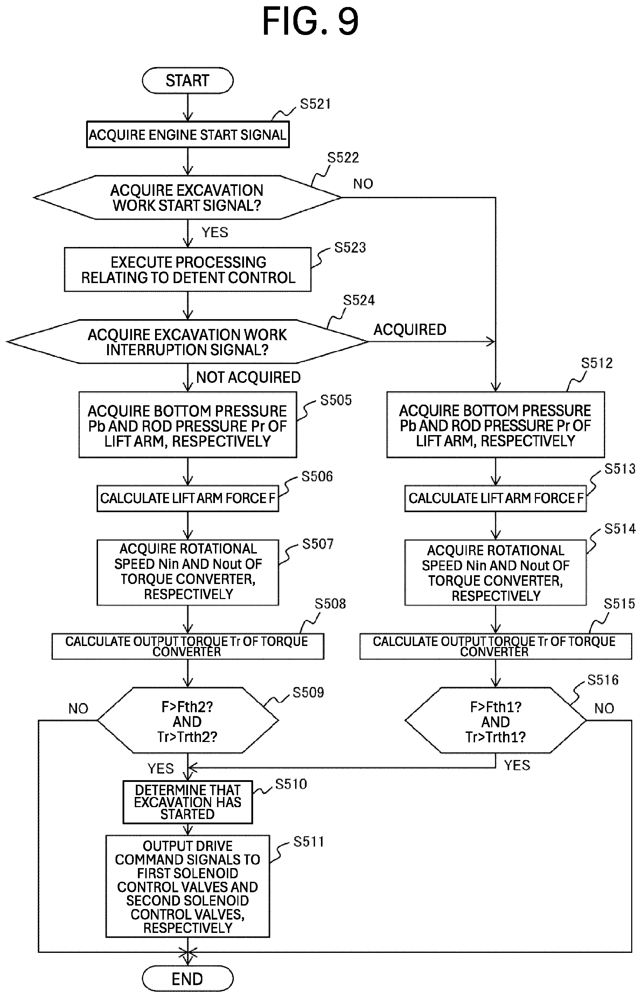

FIG. 8 is a functional block diagram illustrating the functions provided in the controller 5A according to the second embodiment. FIG. 9 illustrates a flowchart of a flow of the processing to be executed in the controller 5A according to the second embodiment.

As illustrated in FIG. 8, the controller 5A according to the present embodiment includes a data acquisition section 50A, the bucket cylinder length calculation section 51, a bucket detent control section 520, a lift arm cylinder length calculation section 51A, a lift arm detent control section 52A, the lift arm load calculation section 53, the traveling device load calculation section 54, an excavation start determination section 55A, a threshold value storage section 56, a bucket drive command section 57, and a lift arm drive command section 58.

The data acquisition section 50A acquires the start signal of the engine 40 and an excavation work start signal corresponding to an ON signal of the excavation work start switch which have been output from the remote control device 6, and data relating to the lift arm angle detected by the lift arm angle sensor 31, the bell crank angle detected by the bell crank angle sensor 32, the rod pressure Pr of the lift arm cylinder 22 detected by the rod pressure sensor 34A, the bottom pressure Pb of the lift arm cylinder 22 detected by the bottom pressure sensor 34B, the input shaft rotational speed Nin of the torque converter 41 detected by the input-side rotational speed sensor 33A, and the output shaft rotational speed Nout of the torque converter 41 detected by the output-side rotational speed sensor 33B, respectively.

In the present embodiment, the bucket detent control section 520 decides the control content (bucket detent control content) for the bucket solenoid control valves 45A, 45B based on the excavation work start signal acquired by the data acquisition section 50A and the cylinder length of the bucket cylinder 24 calculated by the bucket cylinder length calculation section 51.

The lift arm cylinder length calculation section 51A calculates the cylinder length of the lift arm cylinders 22 based on the lift arm angle acquired by the data acquisition section 50A. The cylinder length of the lift arm cylinders 22 calculated by the lift arm cylinder length calculation section 51A corresponds to the data relating to the current position (posture) of the lift arm 21. The cylinder length of the lift arm 21 may be the length of the rod 220 or the whole length of the lift arm cylinders 22.

The cylinder length of the lift arm cylinders 22 may be detected using, for example, a displacement meter mounted to the lift arm cylinders 22. That is, the controller 5A does not necessarily have to include the lift arm cylinder length calculation section 51A.

The lift arm detent control section 52A decides the control content (lift arm detent control content) for the lift arm solenoid control valves 44A, 44B based on the excavation work start signal acquired by the data acquisition section 50A and the cylinder length of the lift arm cylinders 22 calculated by the lift arm cylinder length calculation section 51A. Specifically, the lift arm detent control section 52A decides the control content relating to the operations of the lift arm 21, such as how the lift arm 21 should be operated from the current position to the position corresponding to the ground horizontal posture.

The excavation start determination section 55A determines "excavation of the working target object will start" in the case where the processing relating to the bucket detent control is executed by the bucket detent control section 520 and the processing relating to the lift arm detent control is executed by the lift arm detent control section 52A, respectively, and also in the case where the lift arm force F calculated by the lift arm load calculation section 53 is more than the predetermined working device load Fth (F>Fth) and the output torque Tr of the torque converter 41 calculated by the travelling device load calculation section 54 is more than the predetermined travelling device load Trth (Tr>Trth).

Unlike the lift arm drive command section 58 according to the first embodiment, the lift arm drive command section 58A outputs, to the lift arm solenoid control valves 44A, 44B, not only the drive command signals relating to the autonomous excavation control but also drive command signals which are based on the content of the lift arm detent control decided by the lift arm detent control section 52A.

In FIG. 8, the controller 5A is not configured to include the display command section 59 and thus "excavation start determination in progress" is not notified, however the present embodiment is not limited thereto, and for example, "excavation start determination in progress" may be displayed on a display screen provided in the remote control device 6.

As illustrated in FIG. 9, in the controller 5A according to the present embodiment, firstly, the data acquisition section 50A acquires the start signal of the engine 40 output from the remote control device 6 (step S521).

Next, the controller 5A determines whether the data acquisition section 50A has acquired the excavation work start signal from the remote control device 6 (step S522).

In the case where it is determined in step S522 that the data acquisition section 50A has acquired the excavation work start signal from the remote control device 6 (step S522/YES), the bucket detent control section 520 executes the processing relating to the bucket detent control, and the lift arm detent control section 52A executes the processing relating to the lift arm detent control (step S523).

Next, the controller 5A determines whether the data acquisition section 50A has acquired an interruption signal for the excavation work (OFF signal of the excavation work start switch) from the remote control device 6 (step S524).

In step S524, in the case where it is determined that the data acquisition section 50A has not acquired the excavation work interruption signal from the remote control device 6 (step S524/ NOT ACQUIRED), the processing proceeds to step S505 and the data acquisition section 50A acquires the rod pressure Pr of the lift arm cylinder 22 detected by the rod pressure sensor 34A and the bottom pressure Pb of the lift arm cylinder 22 detected by the bottom pressure sensor 34B.

The processing after step S505 in the controller 5A proceeds in the same manner as that of the processing in the controller 5 according to the first embodiment.

On the other hand, in the case where it is determined in step S522 that the data acquisition section 50A has not acquired the excavation work start signal from the remote control device 6 (step S522/NO) and it is determined in step S524 that the data acquisition section 50A has acquired the excavation work interruption signal from the remote control device 6 (step S524/YES), the processing proceeds to step S512 and the data acquisition section 50A acquires the rod pressure Pr of the lift arm cylinder 22 detected by the rod pressure sensor 34A and the bottom pressure Pb of the lift arm cylinder 22 detected by the bottom pressure sensor 34B (step S512).

The processing after step S512 in the controller 5A proceeds in the same manner as that of the processing in the controller 5 according to the first embodiment.

As described above for the wheel loader 1 according to the present embodiment, in the case of remotely operating the working device 2, the same operations and effects as those of the first embodiment can be achieved.

Hereinabove, the embodiments of the present invention have been described. The present invention is not limited to the embodiments described above, and includes various modifications. For example, the embodiments described above have been described in detail for the purpose of making the present invention easy to be understood, but are not necessarily limited to the ones having all the features described above. In addition, a part of the configuration of the embodiments described above can be replaced with a configuration of other embodiments, and a configuration of other embodiments can be added to the configuration of the embodiments described above. Furthermore, for a part of the configuration of the embodiments described above, other configurations may be added, or deletion or replacement may be performed.

For example, in the embodiments described above, a torque converter system is employed for the travelling drive system, however, the present invention is not limited thereto, and an HST system may be employed therefor.

### REFERENCE SIGNS LIST

1: wheel loader
4: traveling device
5, 5A: controller
6: remote control device
21: lift arm
22: lift arm cylinder
23: bucket
24: bucket cylinder
33A: input-side rotational speed sensor (second load detection device)
33B: output-side rotational speed sensor (second load detection device)
34A: rod pressure sensor (first load detection device)
34B: bottom pressure sensor (first load detection device)
44: lift arm directional control valve
45: bucket directional control valve
123: working operation lever (operation device)
124: monitor (notification device)
Fth: predetermined working device load
Fth1: first working device load (predetermined working device load)
Fth2: second working device load (predetermined working device load)
Trth: predetermined travelling device load
Trth 1: first travelling device load (predetermined travelling device load)
Trth 2: second travelling device load (predetermined travelling device load)
X: pile (working target object)

## Claims

1. A wheel loader comprising:
a lift arm rotatably mounted to a vehicle body;
a bucket rotatably mounted to a distal end portion of the lift arm;
lift arm cylinders for driving the lift arm;
a bucket cylinder for driving the bucket;
a hydraulic pump for supplying hydraulic oil to the lift arm cylinders and the bucket cylinder, respectively;
a lift arm directional control valve for controlling a flow of the hydraulic oil supplied from the hydraulic pump to the lift arm cylinders;
a bucket directional control valve for controlling a flow of the hydraulic oil supplied from the hydraulic pump to the bucket cylinder; and
a controller configured to the lift arm directional control valve and the bucket directional control valve, respectively, so as to carry out bucket detent control for holding the bucket in a posture in which a bottom surface of the bucket is parallel to a ground surface that the vehicle body is touching, and autonomous excavation control for autonomously excavating a working target object,
wherein
the wheel loader includes a first load detection device for detecting a load applied to the lift arm, and
the controller is configured to execute processing relating to the bucket detent control, and, in a case where the load applied to the lift arm detected by the first load detection device is more than a predetermined working device load, execute processing relating to the autonomous excavation control.

2. The wheel loader according to claim 1, further comprising:
a traveling device; and
a second load detection device for detecting a load applied to the traveling device, wherein
the controller is configured to execute the processing relating to the bucket detent control, and, in a case where the load applied to the lift arm detected by the first load detection device is more than the predetermined working device load and the load applied to the traveling device detected by the second load detection device is more than a predetermined traveling device load, execute the processing relating to the autonomous excavation control.

3. The wheel loader according to claim 1, further comprising an operation device for operating the lift arm and the bucket, respectively, wherein
the operation device includes a bucket detent position at which a bucket detent operation signal for holding the bucket in the posture in which the bottom surface of the bucket is parallel to the ground surface that the vehicle body is touching is output to the controller, and
the controller is configured to:
upon acquiring the bucket detent operation signal from the operation device, execute the processing relating to the bucket detent control;
upon acquiring a bucket operation signal relating to an operation of the bucket from the operation device after executing latest processing relating to the bucket detent control, in a case where the load applied to the lift arm detected by the first load detection device is more than a predetermined first working device load, execute the processing relating to the autonomous excavation control; and
upon not acquiring the bucket operation signal from the operation device after executing the latest processing relating to the bucket detent control, in a case where the load applied to the lift arm detected by the first load detection device is more than a predetermined second working device load which is set to a value less than the first working device load, execute the processing relating to the autonomous excavation control.

4. The wheel loader according to claim 3, further comprising:
a traveling device; and
a second load detection device for detecting a load applied to the traveling device, wherein
the controller is configured to:
upon acquiring the bucket operation signal from the operation device after executing the latest processing relating to the bucket detent control, in a case where the load applied to the lift arm detected by the first load detection device is more than the first working device load and the load applied to the traveling device detected by the second load detection device is more than a predetermined first traveling device load, execute the processing relating to the autonomous excavation control; and
upon not acquiring the bucket operation signal from the operation device after executing the latest processing relating to the bucket detent control, in a case where the load applied to the lift arm detected by the first load detection device is more than the predetermined second working device load and the load applied to the traveling device detected by the second load detection device is more than a second traveling device load which is set to a value less than the first traveling device load, execute the processing relating to the autonomous excavation control.

5. The wheel loader according to claim 3, further comprising a notification device capable of notifying that the controller is determining whether excavation of the working target object has started, wherein
in a case where the controller has not acquired the bucket operation signal from the operation device after executing the latest processing relating to the bucket detent control, the notification device notifies that the controller is determining whether the excavation of the working target object has started.

6. The wheel loader according to claim 1, wherein
the controller is configured to:
upon acquiring an excavation work start signal for starting an excavation work of the working target object from a remote control device capable of outputting the excavation work start signal, execute the processing relating to the bucket detent control and processing relating to lift arm detent control for holding the lift arm in a posture in which a position of a front end portion of the lift arm is lower than that in a horizontal posture of the lift arm, respectively;
upon acquiring an interruption signal for interrupting the excavation work output from the remote control device after executing latest processing relating to the bucket detent control and latest processing relating to the lift arm detent control, respectively, in a case where the load applied to the lift arm detected by the first load detection device is more than a predetermined first working device load, execute the processing relating to the autonomous excavation control; and
upon not acquiring the interruption signal output from the remote control device after executing the latest processing relating to the bucket detent control and the latest processing relating to the lift arm detent control, in a case where the load applied to the lift arm detected by the first load detection device is more than a second working device load set to a value less than the first working device load, execute the processing relating to the autonomous excavation control.

7. The wheel loader according to claim 6, further comprising:
a traveling device; and
a second load detection device for detecting a load applied to the traveling device, wherein
the controller is configured to:
upon acquiring the interruption signal output from the remote control device after executing the latest processing relating to the bucket detent control and the latest processing relating to the lift arm detent control, respectively, in a case where the load applied to the lift arm detected by the first load detection device is more than the predetermined first working device load and the load applied to the traveling device detected by the second load detection device is more than a predetermined first traveling device load, execute the processing relating to the autonomous excavation control; and
upon not acquiring the interruption signal output from the remote control device after executing the latest processing relating to the bucket detent control and the latest processing relating to the lift arm detent control, respectively, in a case where the load applied to the lift arm detected by the first load detection device is more than the predetermined second working device load and the load applied to the traveling device detected by the second load detection device is more than a second traveling device load which is set to a value less than the first traveling device load, execute the processing relating to the autonomous excavation control.
